# EUROPEAN PATENT SPECIFICATION

(11) **EP 2 380 444 B1**
(45) Date of publication and mention of the grant of the patent: **08.10.2014**
(21) Application number: 10004360.3
(22) Date of filing: 23.04.2010
(51) Int. Cl.: A22C 11/12, B65B 51/04

(54) **Automatically sealable spool-valve**
Automatisch abdichtbarer Schieber
Distributeur pneumatique scellable automatiquement

(43) Date of publication of application: 26.10.2011
(73) Proprietor: Poly-clip System GmbH & Co. KG, 65795 Hattersheim (DE)
(72) Inventor: Melchert, Uwe, 60385 Frankfurt (DE); Clössner, Stephan, 35630 Ehringshausen Katzenfurt (DE); Schirmeister, Gregor, 63075 Offenbach (DE)
(74) Representative: Eisenführ Speiser

(56) References cited:
- EP-A1- 2 145 542
- CH-A- 434 019
- CH-A- 513 746
- US-A- 3 886 643

## Description

The present invention refers to a clipping-device according to the pre-amble of claim 1.

In particular, the present invention concerns a clipping-device for closing a tubular packaging casing in a clipping-machine for producing sausage-shaped products, in particular sausages, by applying at least a closure means, in particular a closure clip, to the tubular packaging casing. The clipping-device comprises a punch and die assembly for attaching and closing the closure means on the tubular packaging casing. Beyond that the clipping-device also comprises a fluid-drive assembly for driving the punch and die assembly, including at least one punch drive piston being reciprocally movable within a punch drive cylinder, wherein the punch drive piston is reversibly moving at least a punch of the punch and die assembly between an opened and a closed position. The opened position is the maximum displacement between the punch and the die of the punch and die assembly and the closed position is the minimum displacement between the punch and the die of the punch and die assembly. Furthermore, the clipping-device also comprises a control unit with an inlet fluid conduct, an outlet fluid conduct, a control unit housing as well as a spool-valve, which is accommodated within the control unit housing and which includes a spool-piston, having a first spool-piston end and a second spool-piston end, reciprocally movable within a spool-cylinder, for controlling the fluid-drive assembly. The spool-piston is movable between an opened and a closed position, with the opened position enabling a fluid to flow between a fluid-source and the fluid-drive assembly, and with the closed position preventing the fluid to flow between the fluid-source and the fluid-drive assembly.

In sausage production, it is possible to use, for example, a fluid-driven operable clipping-device as part of a clipping-machine for closing the ends of a sausage-shaped product. Such clipping-devices and clipping machines are well known and e.g. disclosed in the CH-patent 434 019, US-patent 3 886 643 and CH-patent 371 703. Thereby, a tubular casing made from a flexible sheet-like packaging material is filled with sausage meat via a filling tube wherein the tubular casing is closed by a closure means, referred to as a closure clip, at its front end, i.e. the end being directed in the feeding direction of the filling material. Such a clipping-machine is also equipped with a displacer assembly, comprising at least one displacer unit having an upper and a lower displacer element. After the filling operation, whereby filling material is being pumped through the filling tube into the one-sided closed tubular packaging casing, is completed, the upper and lower displacer elements are used to create a longitudinal seam-like portion between them, which is at least approximately free of filling material. Two closure clips are then driven onto the seam-like portion along its longitudinal extension gathering the packaging material into a plait-like portion. One of these two closure clips is to close the second or back end of the just filled sausage-shaped product and the other of these two closure clips is to close the first or front end of the subsequent sausage-shaped product. Thereafter, said plait-like portion is severed between the two set closure clips creating one complete sausage-shaped product and a ready-to-be-filled tubular packaging casing closed at its front end, i.e. the end being directed in the feeding direction of the filling material.

For the purpose of attaching and closing the closure clip onto the plait-like portion, the clipping-device comprises a fluid-drive assembly having a fluid-drive piston vertically movable within a fluid-drive cylinder. The piston is rapidly and reciprocally driving a punch from an opened position towards a stationary die constituting its closed position. A single closure clip is feed into the path of the punch and then carried towards the die by the punch. Thereby, the closure clip is deformed so that it is bend around the gathered plait-like portion on the tubular packaging casing.

After the punch has been driven into its closed position, in order to attach the closure clip onto the plait-like portion, it is returned back into its opened position by means of a returning device, usually in form of a spring, in order to release the plait-like portion for the sausage-shaped product to be moved along.

The fluid-driven clipping-device within a clipping-machine is typically powered by compressed air, which is normally supplied by a compressor via a compressed air-inlet conduct (usually a hose) of the clipping-device to the actual fluid-drive and forwarded to the vertically movable fluid-drive piston within the fluid-drive cylinder.

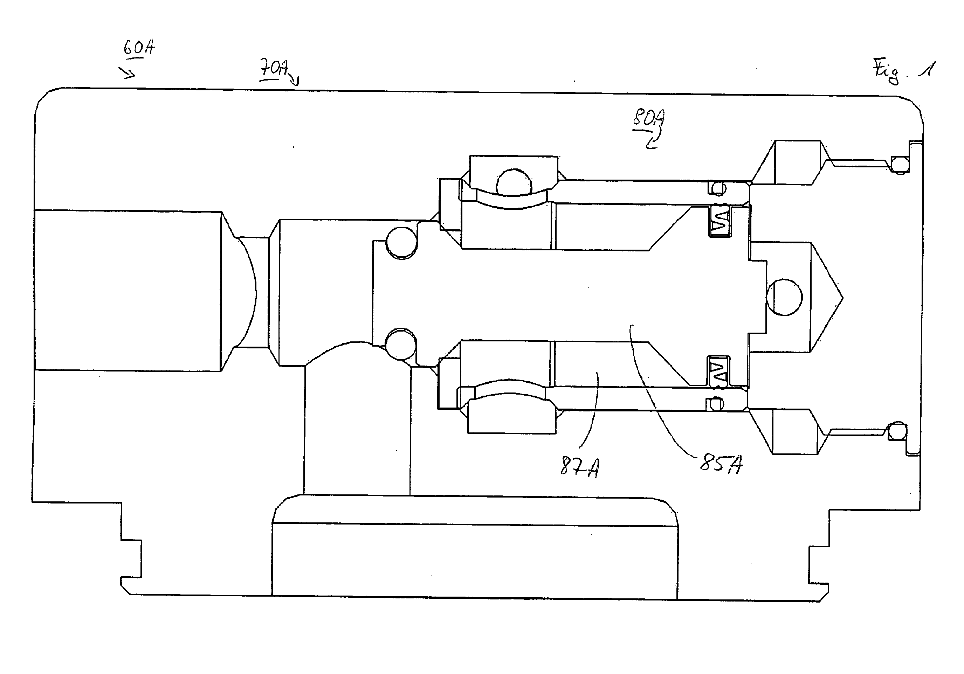

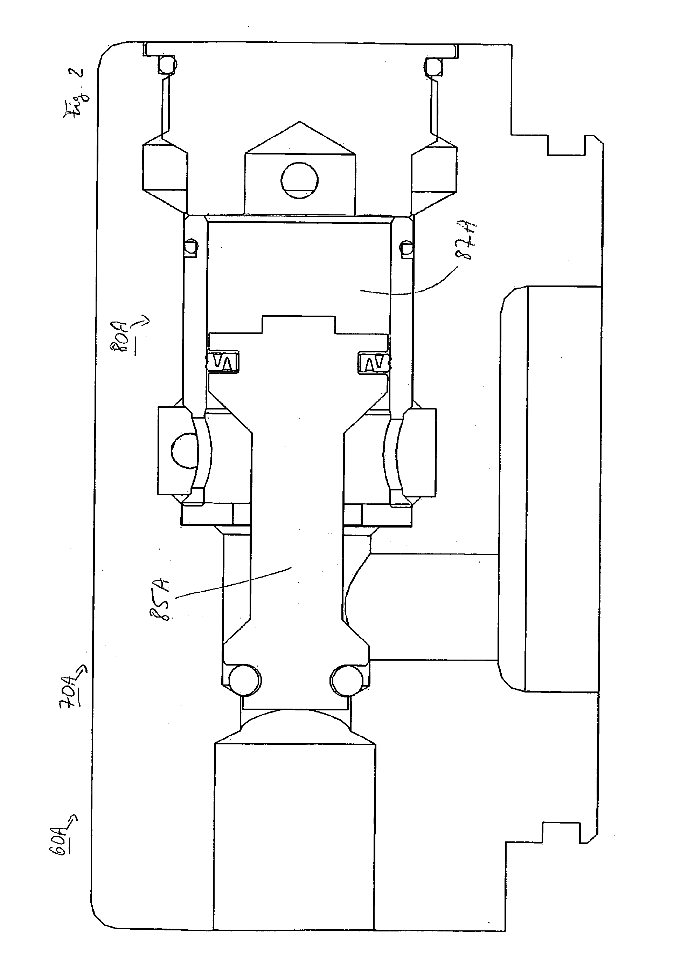

Fig. 1 and 2 show a front view of a prior art spool-valve 80A as part of a control unit 70A in a clipping-device 60A within a clipping-machine A comprising a spool-piston 85A reversibly movable in a spool-cylinder 87A. The spool-valve 80A is regulating the flow of the compressed air to the piston of the clipping-device 60 by moving the spool-piston 85A between a closed position and an opened position. Fig. 1 is disclosing the spool-valve 80A with the spool-piston 85A in its closed position, whereby no fluid is able to flow to the clipping-device 60A. Fig. 2 shows the spool-valve 80A with the spool-piston 85A in its opened position, whereby compressed air is able flowing to the piston of the clipping-device 60A.

However, it is possible that the supply of the compressed air to the piston of the clipping-device is suddenly disrupted e.g. due to a failure malfunction of the compressor, the compressed air hose or by an intended emergency shut-down caused by an error within the clipping-machine. In that case, it is very likely that the spool-piston is coming to a hold somewhere between its opened and closed position. There is a risk in that situation, as it is not easily possible to determine where exactly the spool-piston is actually located within the spool-cylinder.

Without knowing the position of the spool-piston within the spool-cylinder for sure, it is not possible to determine the next action of the clipping-device after a re-start. In that case, it is possible that the fluid-drive assembly is suddenly and unintentionally activated when the fluid is supplied again to the clipping-device. This follows that an unintended stroke of the punch could result in hitting and consequently damaging the tubular packaging casing of a half-filled sausage-shaped product or components of the clipping-machine.

The object of the present invention is to solve the above described problem. In particular, it is the object of the present invention to provide a clipping-device according to independent claim 1 for closing a tubular packaging casing in a clipping-machine, with which a reliable handling of the clipping-machine can be achieved as well as potential damages of the sausage-shaped product as well as the clipping-machine itself can be avoided.

The above object is solved by the features of independent claim 1. Preferred embodiments are defined in sub-claims 2 to 15 following said independent claim 1.

In particular, the above object is solved by a clipping-device for closing a tubular packaging casing in a clipping-machine for producing sausage-shaped products, in particular sausages, by applying at least a closure means, in particular a closure clip, to the tubular packaging casing. The clipping-device comprises a punch and die assembly for attaching and closing the closure means on the tubular packaging casing. Beyond that the clipping-device also comprises a fluid-drive assembly for driving the punch and die assembly, including at least one punch drive piston being reciprocally movable within a punch drive cylinder, wherein the punch drive piston is reversibly moving at least a punch of the punch and die assembly between an opened and a closed position. The opened position is the maximum displacement between the punch and the die of the punch and die assembly and the closed position is the minimum displacement between the punch and the die of the punch and die assembly. Furthermore, the clipping-device also comprises a control unit with an inlet fluid conduct, an outlet fluid conduct, a control unit housing as well as a spool-valve, which is accommodated within the control unit housing and which includes a spool-piston, having a first spool-piston end and a second spool-piston end, reciprocally movable within a spool-cylinder, for controlling the fluid-drive assembly. The spool-piston is movable between an opened and a closed position, with the opened position enabling a fluid to flow between a fluid-source and the fluid-drive assembly, and with the closed position preventing the fluid to flow between the fluid-source and the fluid-drive assembly.

According to the present invention, it is proposed that the control unit may comprise a preventing device for preventing an unintended fluid connection between the fluid-source and the fluid-drive assembly. Preventing the unintended fluid connection between the fluid-source and the fluid-drive assembly secures to avoid an unintended as well as accidental functioning of the clipping-device and thereby potential damages of the clipping-machine or injuries of the operator.

Also, it is advantages that the preventing device can comprise a preventing element having an operating position as well as a non-operating position and acting upon the spool-piston, in order to at least urge, i.e. drive and if required hold, the spool-piston into its closed position when the preventing element is in its operating position.

It is also possible that the preventing element may be urged by a spring into its operating position. However, it may also be feasible that the preventing element can urged into its operating position by a magnet or some other kind of energy storing device.

In another favourable embodiment, it is also likely that the preventing element may be urged by a fluid pressure being derived by the fluid-source into its non-operating position, for assuring that the preventing element can only be brought into its non-operating position, when a fluid pressure derived by the fluid-source is present.

It is also advantages that the preventing device can comprise a piston-cylinder assembly comprising a preventing device piston and a preventing device cylinder, wherein the preventing element is formed by the preventing device piston.

In another advantageous embodiment, it is possible that an abutment unit may comprise an abutment element as well as a counter-abutment element.

According to a first preferred embodiment of the present invention, it is possible that the preventing device piston and the spool-piston can be in a coaxial alignment, in order to assure that the preventing device piston and the spool-piston are moving in the same direction.

For the benefit of constructing the preventing device in a compact manner, it may be favourable that the preventing device piston may be positioned at least partially within the spool-piston so that the preventing device cylinder can be formed by the inside of the spool-piston. However, it is also, of course, possible that a separate preventing device cylinder may be provided for the preventing device piston.

Furthermore, it may also be beneficial that the preventing device piston may comprise a preventing device piston rod having a first piston rod end as well as a second piston rod end, wherein the first piston rod end can be coupled to the preventing device piston enabling the piston rod to move in the same direction as the preventing device piston and the second piston rod end may be serving as the counter-abutment element, for limiting the movement of the spool-piston within the spool-cylinder when the preventing device piston can be in its operating position.

It is also possible that the abutment element can be in form of a setscrew positioned at least partially within the outlet fluid conduct and extending into the path of the preventing device piston rod, in order to limit the movement of the preventing device piston. Alternatively, the function of the setscrew can also be fulfilled by a stop screw, a bold or something else equivalent.

In another embodiment, it may be advantageous that the abutment element can be in form of an insert element positioned inside the outlet fluid conduct comprising at least one insert element bar extending radially towards the centre of the insert element and into the path of the preventing device piston rod, in order to limit the movement of the preventing device piston. The insert element may also be in form of a spoked wheel, allowing the fluid to pass through the openings between the spokes and the centre of the spoked wheel to limit the movement of the preventing device piston rod.

According to a second preferred embodiment of the present invention, it can be feasible that the preventing device piston may be positioned axially parallel to the spool-piston and within the control unit housing. However, it is also, certainly, possible that the preventing device piston may be positioned outside the control unit housing.

Moreover, it may also be beneficial that that the preventing element can be urged by a spring into its operating position. However, it is also possible that the preventing element is urged into its operating position by a magnet or some other kind of energy storing device.

Beyond that, it may also possible that the preventing element may be urged by a fluid pressure being derived from the fluid-source into its non-operating position, for assuring that the preventing element can only be brought into its non-operating position, when a fluid pressure derived by the fluid-source is present.

In another embodiment, it may also be advantageous that the preventing device may comprise at least one arm and a stopper element. The arm may be in a perpendicular alignment to the preventing device piston as well as firmly connected to the preventing device piston. The stopper element may extend into the path of the spool-piston, in order to transfer the mechanical energy of the spring from the preventing device to the spool-piston.

It can also be beneficial that the stopper element can be serving as the counter-abutment element and the first spool-piston end may be serving as the abutment element, for limiting the movement of the spool-piston within the spool-cylinder when the preventing device piston may be in its operating position.

For the purpose of upgrading an existing prior art clipping machine it may possible that the preventing device is detachable from the spool-valve, in order to replace the existing prior art spool-vale with a spool-valve accommodating the inventive preventing device together with appropriate abutment element.

Finally, it may be also beneficial that the control unit housing is detachable from the control unit, in order to replace the existing prior art control unit housing with a control unit housing 71 accommodating the inventive preventing device.

Other advantages and two embodiments of the present invention shall now be described with references to the attached drawings. The terms "top", "bottom", "left" and "right" used when describing the embodiment, relate to the drawings orientated in such a way that the reference numerals and name of the figures can be read normally.

In the drawings
- Fig. 1: shows a front view of a prior art control unit as part of a clipping-device within a clipping-machine having a spool-valve comprising a spool-piston in a closed position;
- Fig. 2: shows a front view of the prior art control unit according to Fig. 1 with the spool-piston in an opened position;
- Fig. 3: shows an overall side view of a clipping-machine having a clipping-device according to the invention connected to a fluid-source;
- Fig. 4: shows a front view of a control unit as part of a clipping-device within a clipping-machine according to a first embodiment of the invention comprising a spool-valve having a spool-piston in a closed position and a preventing device having a preventing element in a non-operating position;
- Fig. 5: shows a front view of the control unit according to Fig. 4 with the spool-piston in a closed position and the preventing element in an operating position;
- Fig. 6: shows a top view of the control unit as part of the clipping-device within a clipping-machine according to a second embodiment of the invention comprising the spool-valve having the spool-piston in a closed position and the preventing device having the preventing element in a non-operating position; and
- Fig. 7: shows a top view of the control unit according to Fig. 6 with the spool-piston in an opened position and the preventing element in a non-operating position.

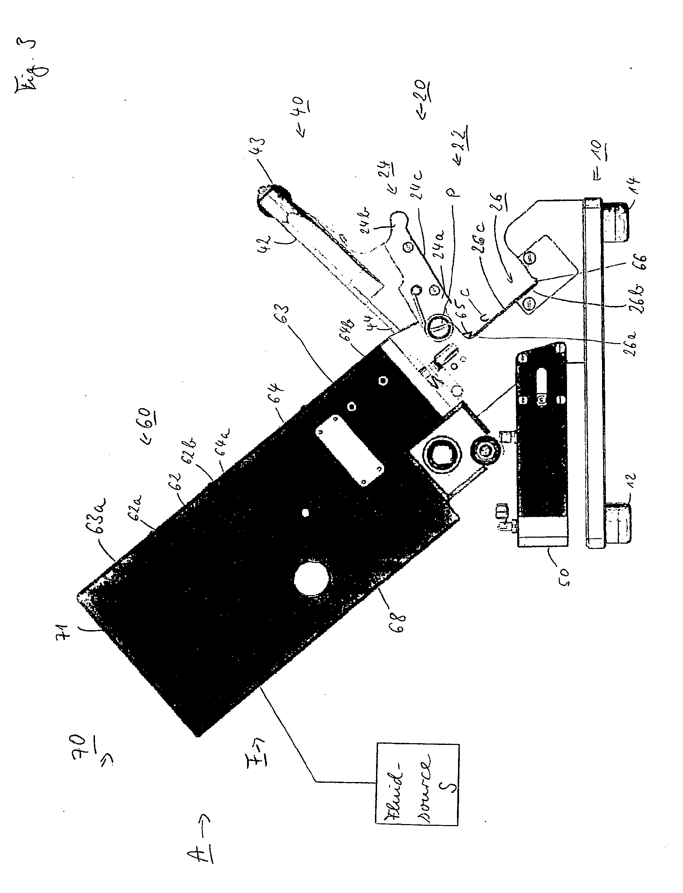

Fig. 3 shows an overall side of a clipping-machine A comprising a stand unit 10, a filling tube (here not shown), a displacer assembly 20, a machine frame 30, a hand-lever 40, a cutting-tool 50 as well as a clipping-device 60 as its main components. In the following, these main components of the clipping-machine A are described.

The stand unit 10 comprises a base plate 11 and at least three feet of which only the right-hand side feet 12, 14 are shown in Fig. 3. The stand unit 10 is used to provide a safe and stable stand on top of a table or something equivalent. The filling tube (here not shown) is used to pump a filling material (here not shown) from a filling material container (here not shown) in a feeding direction R into a one-sided closed tubular packaging casing (also not shown), which is placed around the filling tube (here not shown).

Furthermore as shown in Fig. 3, the displacer assembly 20 comprises a displacer unit 22 having at least one pair of an upper displacer element 24 and a lower displacer element 26. The upper displacer element 24 comprises a first end 24a, a second end 24b and a bottom surface 24c with a central longitudinal cavity (not shown) running from the first end 24a to the second end 24b. The first end 24a of the upper displacer element is pivotable connected to the machine frame 30 at a pivot point P. The lower displacer element 26 is fixed to the machine frame 30 and comprises a first end 26a, a second end 26b as well as a surface 26c also having two central longitudinal cavities (not shown) running from the first end 26a to the second end 26b. The two longitudinal cavities (not shown) are positioned in a distance to each other serving the purpose of guiding at least one clipping means C, e.g. a closure clip along the upper and lower displacer elements 24, 26. The upper displacer element 24 is positioned to the lower displacer element 26 like a scissor able to pivot from an opened position to a closed position, whereby the opened position is the maximum displacement between the upper and lower displacer element 24, 26 and whereby the closed position is the minimum displacement between the upper and lower displacer element 24, 26. When the upper displacer element 24 is in its closed position, the bottom surface 24c is overlapping the surface 26c leaving a gap between the upper and lower displacer elements 24, 26 for the filling material to be pushed to either side of the between the upper and lower displacer elements 24, 26 and the packaging casing (not shown) not to be completely wedged between them.

By pivoting the upper displacer element 24 towards the lower displacer element 26 from its opened position into its closed position a longitudinal seam-like portion is created on the tubular packaging casing (here not shown) and between the upper and lower displacer elements 24, 26, which is at least approximately free of filling material (here not shown).

The clipping-machine A also comprises a punch and die assembly 61, which again comprises a punch 65 and a die 66, in order to attach at least one clipping means C onto the not shown packaging casing. The punch and die assembly 61 as well as the actual clipping process will be explained later on in the description.

Moreover, the clipping-machine A comprises the hand-lever 40 having a first end 42 and a second end 44. The first end 42 comprises a handle 43. The second end 44 is coupled to the second end 24b of the upper displacer element 24. By means of the hand-lever 40 an operator (here not shown) is able to manually operate the displacer assembly 20, as the operator (not shown) is able to pull the handle 43 down towards the stand 10, in order to drive the upper displacer element 24 towards the lower displacer element 26.

Beyond that, the clipping-machine A comprises the cutting-tool 50 for severing the plait-like portion on the tubular packaging casing (here not shown). The cutting process will be explained in more detail later on in the description.

Also, the clipping-machine A comprises a clipping-device 60. The clipping-device 60 comprises a fluid-drive assembly F. The fluid-drive assembly F comprises a punch and die assembly 61 having a punch drive piston 62 as well as a punch drive cylinder 63.

The punch drive cylinder 63 comprises a top end 63a and a bottom end 63b. The punch drive piston 62 also comprises a top end 62a as well as a bottom end 62b and is reversibly movable within the punch drive cylinder 63 between an opened position and a closed position. The opened position is defined as the position when the punch drive piston 62 is near the top end 63a of the punch drive cylinder 63 and the closed position is defined as the position when the punch drive piston 62 is near the bottom end 63b of the punch drive cylinder 63.

The punch drive piston 62 comprises a punch drive piston rod 64, which again comprises a top end 64a as well as a bottom end 64b. The top end 64a of the punch drive piston rod 64 is coupled to the punch drive piston 62.

The punch 65 of the punch and die assembly 61 is coupled to the bottom end 64b of the punch drive piston rod 64. When the punch drive piston 62 is in its closed position, the punch 65 is driven towards the die 66, in order to deform the clipping means C resting within the die 66, so that it is bent around the gathered plait-like portion on the tubular packaging casing (here not shown). The punch drive piston 62 as part of the fluid-drive assembly F is powered by an external fluid source S and thereby driven into its closed position.

The punch and die assembly 61 also comprises a returning pressure spring 68. The returning pressure spring 68 comprises a first end 68a as well as a second end 68b. The first end 68a of the returning pressure spring 68 is coupled to the bottom end 62b of the punch drive piston 62 and the bottom end 68b of the returning pressure spring 68 is coupled to the bottom end 63b of the punch drive cylinder 63. The returning pressure spring 68 is in longitudinal extension parallel to the punch drive piston rod 64. The returning pressure spring 68 is in its relaxed state, when the punch drive piston 62 is in its opened position and the returning pressure spring 68 is in its compressed state, when the punch drive piston 62 is in its closed position. The returning pressure spring 68 is functioning to push the punch drive piston 62 back into its opened position after the clipping means C has been attached and closed around the gathered plait-like portion on the tubular packaging casing. However, it also possible that the punch drive piston 62 is pushed back into its opened position by the fluid-drive assembly itself.

The functionality of the punch and die assembly 61 within the fluid-driven assembly F will be explained later in the description.

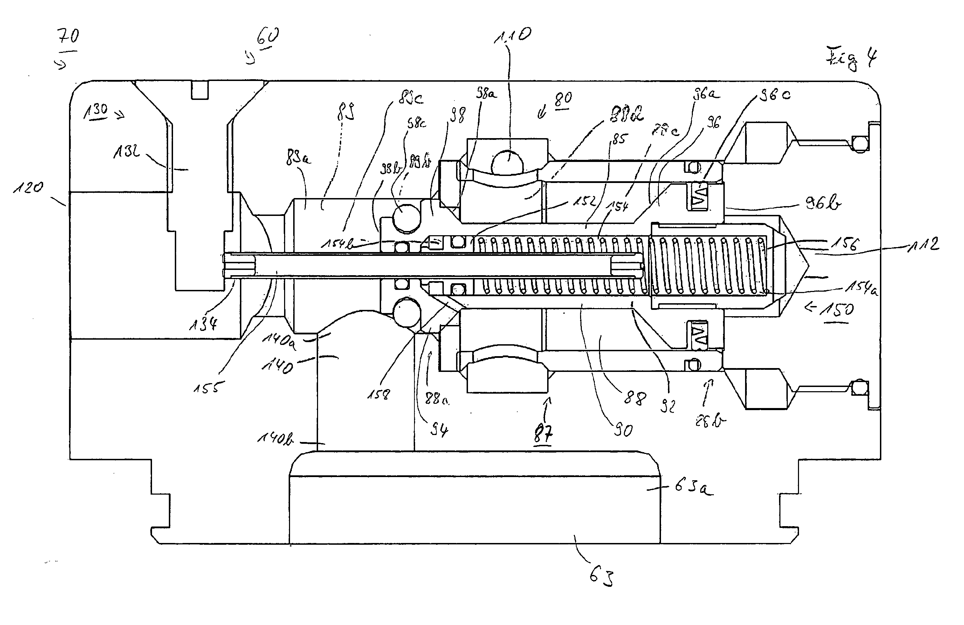

Fig. 4 to 7 show preferred embodiments of a partially shown clipping-device according to the present invention and described in the following. The inventive clipping-device is part of a clipping-machine which is used in the production of sausage-shaped products, for example sausages. The inventive device may also be used, of course, in the production of sausage-shaped products that do not include foodstuff or comestible goods, but, for example, sealing compounds or adhesive.

According to a first preferred embodiment of the present invention Fig. 4 shows a partially front view of the clipping-device 60. The clipping-device 60 also comprises a control unit 70 within a control unit housing 71. The control unit housing 71 accommodates all the components of the control unit 70. The control unit housing 71 is positioned above the top end 63a of the punch drive cylinder 63. The control unit 70 controls the fluid flow from the external fluid source S to the fluid-drive assembly F.

The control unit 70 comprises a spool-valve 80 having a spool-piston 85 and a spool-cylinder 87. The horizontally aligned spool-cylinder 87 comprises a horizontally aligned cylindrical main chamber 88 having a first end 88a, a second end 88b as well as a lateral cylinder surface 88c. The lateral cylinder surface 88c comprises a half cylinder-shaped recess 88d, which is in a perpendicular alignment to the horizontally aligned spool-cylinder 87 and positioned near the first end 88a of the cylindrical main chamber 88. The spool-cylinder 87 also comprises a horizontally aligned cylindrical pre-chamber 89 having a first end 89a, a second end 89b as well as a lateral cylinder surface 89c. The main chamber 88 is positioned with its first end 88a to the second end 89b of pre-chamber 89. The spool-piston 85 is reciprocally movable within the main chamber 88 and the pre-chamber 89 of the spool-cylinder 87 between a closed and an opened position similar to the description of the movement of the prior art spool-piston 85 within the prior art spool-valve 80 shown in Fig. 1 and 2. The spool-piston 85 comprises a cylindrical body 90 with a first end 92 and a second end 94. The cylindrical body 90 comprises a large cone-shaped section 96 at its first end 92 as well as a small cone-shaped section 98. The large cone-shaped section 96 comprises a large lateral cone-surface 96a with a plane base 96b and the small cone-shaped section 98 comprises a small lateral cone-surface 98a with a plane base 98b. Furthermore, the large cone-shaped section 96 also comprises a sealing ring 96c, which is positioned between the cone-shaped section 96 and the main chamber 88. The small cone-shaped section 98 also comprises a sealing ring 98c. The function of the sealing ring 98c will be explained later in the description.

The control unit 70 further comprises an inlet fluid conduct 110 which is positioned at the lateral cylinder surface 88c of the main chamber 88 near its first end 88a. Also, the control unit 70 comprises an activating fluid conduct 112, which is also supplied by a fluid from the external fluid source S. The activating fluid conduct 112 is connected to the second end 88b of the main chamber 88 facing the plane base 96b of the large cone-shaped section 96.

Furthermore, the control unit 70 also comprises an abutment unit 130 having an abutment element 132 as well as a counter-abutment element 134. The counter-abutment element 134 will be described later in the description. The outlet fluid conduct 120 is positioned at the first end 89a of the pre-chamber 89 and provides an exit for the fluid being pushed out of the punch drive cylinder 66b by the punch drive piston 66a returning to its opened position after the clipping-process has been finished. In Fig. 4 the abutment element 132 is embodied as a setscrew.

Alternatively, the control unit 70 may comprise an outlet fluid conduct 120 having an insert element in form of a ring. The ring comprises at least one bar extending radially from the inside wall of the ring towards the centre of that ring. The centre of the ring serves as the counter-abutment element 134.

The control unit 70 further comprises a vertically aligned passage 140 with a first end 140a and a second end 140b. The vertically aligned passage 140 is in a perpendicular alignment to the horizontally aligned spool-cylinder 87 and connected with its first end 140a to the lateral cylinder surface 89c. The second end 140b of the passage 140 is connected to the top end 67 of the punch drive cylinder 63 (shown in Fig. 3). The control unit 70 also comprises a preventing device 150 having a preventing element 152, a preventing device cylinder 154 as well as a preventing device rod 155. The preventing element 152 is in form of a preventing device piston. The preventing device piston rod 155 is in form of a longitudinal shaft having a first end 155a and a second end 155b. The preventing element 152 is positioned approximately half-way between the first end 155a and the second end 155b of the longitudinal shaft of the preventing device rod 155. The first end 155a is also serving as the counter-abutment element 134 for abutting upon the abutment element 132.

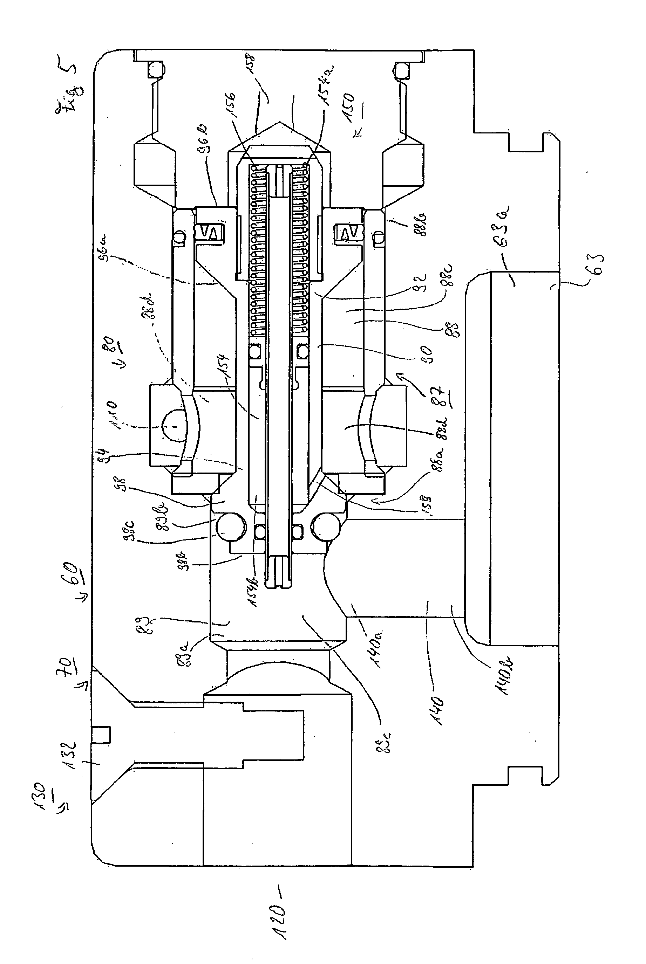

According to the first preferred embodiment of the present invention the preventing device cylinder 154 is formed by the inside of the spool-piston 85. The preventing device cylinder 154 comprises a first end 154a and a second end 154b. The preventing element 152 is reciprocally movable within the preventing device cylinder 154 between an operating position as well as a non-operating position. Fig. 4 shows the preventing element 152 in its operating position, whereby the spool-piston 85 is urged into its closed position. In contrast to that, Fig. 5 shows the preventing element 152 in its operating position, whereby the spool-piston 85 is able to be urged into its opened position.

The preventing device 150 also comprises a spring 156 positioned within a space between the preventing element 152 and the first end 154a of the preventing device cylinder 154. The spring 156 is and remains in its relaxed state when the preventing element 152 is in its operating position. That means that after the preventing device 150 has been brought into its non-operating position, it remains in this very position for the entire clipping process. In contrast to that, Fig. 5 shows the spring 156 in a compressed state when the preventing element 152 is in its non-operating position.

The preventing element 152 further comprises a gasket in form of a sealing ring 157, which is positioned between the preventing element 152 and the preventing device cylinder 154.

Beyond that, the preventing device 150 also comprises a preventing device cylinder inlet fluid conduct 158, which runs in an acute angle from the second end 154b of the preventing device cylinder 154 to the recess 88d of the spool-cylinder 87. Due to the recess 88d the fluid is able to flow around the spool-piston 85 and thereby connecting the preventing device cylinder 154 with the spool-cylinder 87 and allowing the fluid (not shown) to flow from the inlet fluid conduct 110 to the spool-cylinder 87.

For the purpose of upgrading an existing prior art clipping-machine, it is possible to replace the existing prior art spool-vale with a spool-valve accommodating the inventive preventing device 150 together with appropriate abutment element 132 according to the first preferred embodiment of the present invention.

When the clipping-device 60 within the clipping-machine A is set up to be used for attaching and closing the clipping means C onto the plait-like portion of the gathered tubular packaging casing (not shown), the spool-piston 85 is initially urged by the preventing device 150 and in particular by the preventing element 152 in its closed position (as shown in Fig. 4) preventing an unintended fluid flow between the fluid source S and the punch drive piston 62 of the fluid-drive assembly F. Therefore, the preventing element 152 and the preventing device rod 155 are pushed towards the abutment element 132 by the spring 156 being in its relaxed state, as the preventing device 150 is in its operating position.

For starting the production process of sausage-shaped products (not shown), filling material, such as sausage meat, is pumped from the filling material container (not shown) via the filling tube (not shown) into the tubular packaging casing (not shown). The pressure of the filling material is pushing the tubular packaging casing forward until the desired length or weight of the to-be-produced sausage-shaped product is reached. After that, the operator is pulling the hand-lever 40 down towards the stand unit 10, in order to move the upper displacer element 24 towards the lower displacer element 26 for creating a gathered seam-like portion on the tubular packaging casing, which is at least approximately free of filling material.

For attaching and closing at least one clipping means C onto the packaging material a fluid needs to be supplied from a fluid source S to the fluid-drive assembly F, in order to drive the clipping means C by means of the punch drive piston 62 towards the die 66. For that purpose, one or two separate clipping means C are feed into the path of the punch drive piston 62 and then carried towards the die 66 by the punch drive piston 62. The punch drive piston 62 is running through the gap between the upper and lower displacer elements 24, 26 and the closure means C is guided by the not shown cavities. When the clipping means C is running through the not shown gap between the upper and lower displacer elements 24, 26, it is gathering the seam-like portion of the packaging casing into a plait-like portion. Having reached the die 66, the clipping means C is being deformed so that it is bent around the gathered plait-like portion on the tubular packaging casing (here not shown) by means of the punch drive piston 62 pressing against the die 66.

The flow of the fluid towards the punch drive piston is controlled by the control unit 70 using the spool-valve 80 to either block or enable the flow of the fluid from the fluid source S towards the fluid-drive assembly F.

When the clipping-machine A is connected to the external fluid source S, the spool-piston 85 is initially in its closed position with the spring 156 of the preventing device 150 in its relaxed state and the preventing element 152 together with the preventing device rod 155 in its operating position.

For the actual clipping process, fluid is pumped from the external fluid source S via the inlet fluid conduct 110 into the spool-cylinder 87. The fluid is flowing via the preventing device cylinder inlet fluid conduct 158 into the preventing device cylinder 154, generating a fluid force acting upon the first end 152a of the preventing element 152, in order to push the preventing element 152 and the preventing device rod 155 into the non-operating position, as shown in Fig. 5. During the entire clipping process the preventing element 152 remains in its non-operating position, leaving the spool-piston 85 no longer "locked" by the preventing device 150 in its closed position. However, due to the larger effective surface of the large lateral cone-surface 96a compared to the small effective surface of the small lateral cone-surface 98a the spool-piston 85 is urged (i.e. positioned and being hold) in its closed position. When the spool-piston 85 is in its closed position (as shown in Fig. 4), there is no possibility for the fluid to flow from the main chamber 88 via the pre-chamber 89 and through the passage 140 into the punch drive cylinder 63, in order to drive the punch drive piston. The small lateral cone-surface 98a of the spool-piston 85 is locking the second end 89b of pre-chamber 89.

However, in order to allow the fluid to flow from the spool-cylinder 87 into the punch drive cylinder 63, the activating fluid conduct 112, which is connected to the second end 88b of the main chamber 88 facing the plane base 96b of the large cone-shaped section 96, is engaged for creating an additional fluid force acting upon the plane-base 96b of the large cone-shaped section 96. This additional fluid force is supporting the already existing fluid force generated by the fluid within the spool-cylinder 87 acting upon the small effective surface of the small lateral cone-surface 98a. The fluid force generated by the activating fluid conduct 112 together with the fluid force generated by the fluid acting upon the small lateral cone-surface 98a is greater than the fluid force generated by the fluid within the spool-cylinder 87 acting upon the large lateral cone-surface 96a, so that the spool-piston 85 is urged from its closed position (as shown in Fig. 5) into its opened position (as shown equivalently shown in Fig. 2). When the spool-piston 85 is in its opened position, fluid is able to flow into the punch drive cylinder 63 thereby driving the punch drive piston 62 (as shown in Fig. 3) downwards, for driving the punch 65 from its opened position into its closed position onto the die 66 and thereby gathering the seam-like portion into a plait-like portion as well as placing and closing the clipping means C on that plait-like portion on the tubular packaging casing.

After the punch drive piston 62 has driven the punch 65 onto the die 66, in order to deform the clipping means C for attaching and closing it around the plait-like portion, the punch drive piston 62 is driven back from its closed position to its opened position by the returning pressure spring 68.

As soon as the attaching and closing process of the clipping means C onto the plait-like portion has been completed the spool-piston 85 is returning from its opened position back into its closed position. Therefore, the fluid force generated by the activating fluid conduct 112 and acting upon the plane base 96b of the large cone-shaped section 96 is stopped, in order not to support the fluid force generated by the fluid within the spool-cylinder 87 acting upon the small effective surface of the small lateral cone-surface 98a. As a result, the fluid force generated by the fluid within the spool-cylinder 87 acting upon the large lateral cone-surface 96a is again the largest force acting upon the spool-piston 85 and thereby urging the spool-piston 85 into its closed position. As the spool-piston 85 is in its closed position, the small lateral cone-surface 98a of the spool-piston 85 is locking the second end 89b of pre-chamber 89, so that there is no possibility for the fluid to flow from the punch drive cylinder 63 coming through the passage 140 into the pre-chamber 89 and entering the main chamber 88 again. In that situation the fluid is only able to exit through the outlet fluid conduct 120 to leave the clipping-device 60.

As the fluid has left the clipping-device 60 through the outlet fluid conduct 120, the clipping cycle has been complete and the clipping-device 60 is ready for the next clipping cycle.

When the clipping-machine A is disconnected from the external fluid source S, the fluid is no longer flowing via the preventing device cylinder inlet fluid conduct 158 into the preventing device cylinder 154. As a result, no fluid force acting upon the first surface 152a of the preventing element 152 is generated anymore, so that the preventing element 152 and the preventing device piston rod 155 are urged by the spring 156 (which is coming back into its relaxed state) into the operating position and thereby urging the spool-piston 85 into its closed position.

Due to the preventing device 150, the spool-piston 85 is constantly urged back into its closed position in the case that no fluid is acting upon the clipping-device 60.

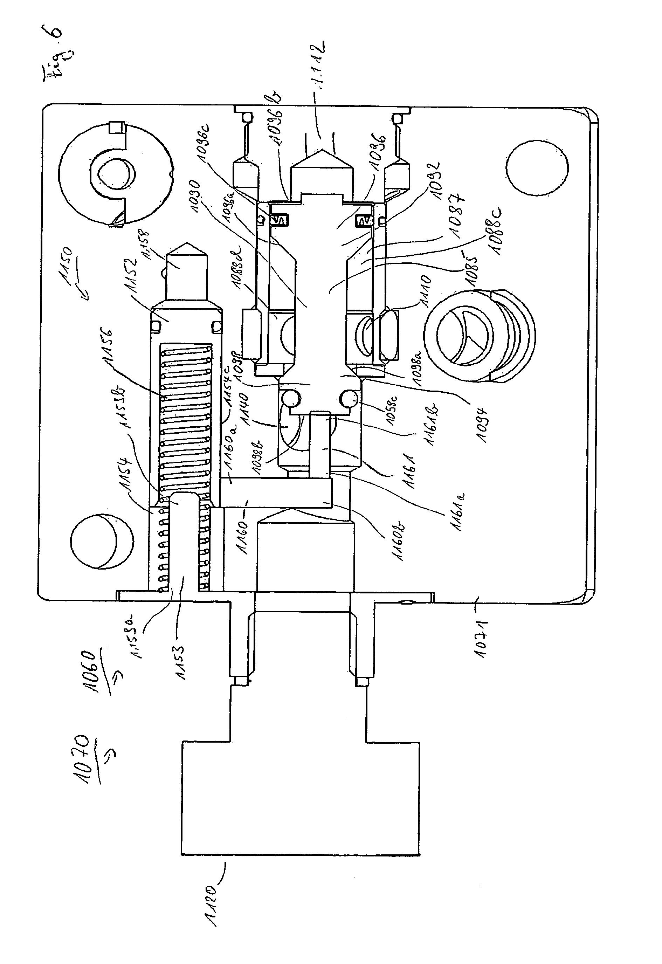

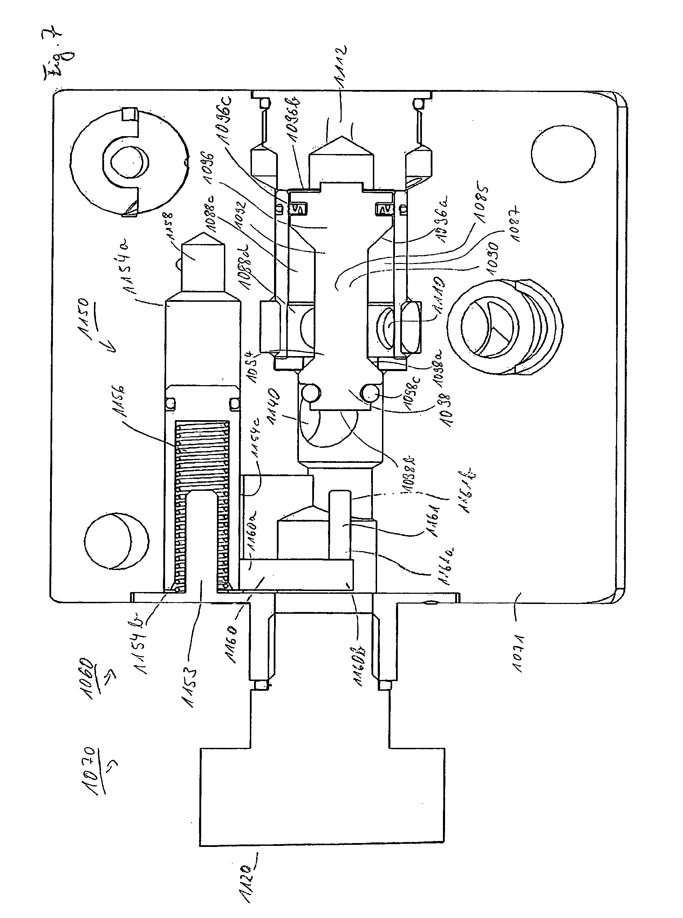

Fig. 6 and 7 show a second preferred embodiment of the present invention. For components which are identical or at least equivalent to the components shown in Fig. 4 and 5, the already used reference numerals are increased by 1000. The functionality of the second embodiment of the present invention shown in Fig. 6 and 7 is corresponds to the functionality of the first embodiment of the present invention (as shown in Fig. 4 and 5).

According to the second preferred embodiment of the present invention, Fig. 6 shows a top view of the control unit 1070. The preventing device 1150 comprises a preventing element 1152 in form of a preventing device piston which is reversibly movable within a preventing device cylinder 1154 between the operating and non-operating position and a spring 1156. The preventing device 1150 also comprises a support element 1153 in form of a longitudinal shaft. The support element 1153 comprises a first end 1153a and a second free end 1153b. The preventing device cylinder 1154 comprises a first end 1154a and a second end 1154b as well as a longitudinal opening 1154c extending from the second end 1154a to approximately half-way to the middle of the preventing device cylinder 1154 parallel to the longitudinal extension of the preventing device cylinder 1154. The support element 1153 is in a parallel alignment to the preventing device cylinder 1154 and its first end 1153a connected to the second end 1154b of the preventing device cylinder 1154. Also, the preventing device cylinder 1154 is positioned separately within the control unit housing 71 and located parallel to the spool-cylinder 87. Fig. 6 shows the spool-piston 1085 in its closed position, as the spring 1156, which is positioned on the support element 1153, is in its relaxed state urging the preventing element 1152 into its operating position.

The preventing device 1150 comprises a preventing device fluid conduct 1159 for allowing fluid, coming from the fluid source S, to flow into and out of the preventing device cylinder 1154.

Furthermore, the preventing device 1150 also comprises an arm 1160 and a stopper element 1161. The arm 1160 comprises a first end 1160a and a second end 1160b. The arm 1160 is connected by its first end 1160a in a perpendicular alignment to the preventing element 1152 reaching through the longitudinal opening 1154c. The stopper element 1161 is in form of a longitudinal shaft having a first end 1161 a as well as a second end 1161 b. The stopper element 1161 is connected with its first end 1161 a in a perpendicular alignment to the second end 1160b of the arm 1160 and extending parallel to the preventing device cylinder 1154. The second end 1161 b of the stopper element 1161 is serving as the abutment element 1132 of the abutment unit 1130. The plane base 1098b of the small lateral cone-surface 1098a is thereby serving as the counter-abutment element 1134 of the abutment unit 1130.

When the preventing device 1150 is in its operating position, the second end 1161 b of the stopper element 1161 serving as abutment element 1132 is touching the plane base 1098b serving as the counter-abutment element 1134 and thereby urging the spool-piston 1085 into its closed position.

In order to urge the preventing element 1152 into its non-operating position, as shown in Fig. 7, a fluid is pumped through the preventing device fluid conduct 1159 into the preventing device cylinder 1154 acting upon the preventing element 1152. By doing so, the spring 1156 is compressed from its relaxed state into its compressed state and the preventing element 1152 is urged into its non-operating position, allowing the spool-piston 1085 to move from its closed position (as shown in Fig. 7) into its opened position (as shown in Fig. 2) and the actual clipping process to start, as described above.

For the purpose of upgrading an existing prior art clipping-machine, it is possible to replace the existing prior art control unit housing with a control unit housing 71 accommodating the inventive preventing device 1150 according to the second preferred embodiment of the present invention.

According to the present invention, it is possible to know the position of the spool-piston 85A, 85, 1085 within the spool-cylinder 87A, 87, 1087 and to determine the next action of the clipping-device 60A, 60, 1060 after a re-start, as the spool-piston 85A, 85, 1085 is constantly urged back into its closed position by the inventive preventing device 150, 1150 in a case of a sudden disruption or lose of the fluid pressure. As a result, the clipping-device 60A, 60, 1060 is able to prevent a sudden unintended and possible dangerous stroke of the punch drive piston 62, 1062 and thereby able to avoid potential damages of the sausage-shaped products or the clipping-machine A itself.

The present invention has been illustrated and described in detail in the drawings and the foregoing description, such illustrations and descriptions are to be considered illustrative or exemplary and not restrictive. The invention is not limited to the disclosed embodiments, and even reference numbers shown in the drawings and referred to in the description and the claims do not limit the scope of the present invention. It is considered that all technical means and equivalent elements or components are included in the present invention and are considered to form part of the scope of the present invention as defined by the appended claims.

## Claims

1. A clipping-device for closing a tubular packaging casing, in a clipping-machine A, for producing sausage-shaped products, in particular sausages, by applying at least a closure means C, in particular a closure clip, to the tubular packaging casing, the clipping-device comprises:
a punch and die assembly (61) for attaching and closing the closure means C on the tubular packaging casing,
a fluid-drive assembly (F) for driving the punch and die assembly (61), including at least one punch drive piston (62) being reciprocally movable within a punch drive cylinder (63), wherein the punch drive piston (62) is reversibly moving at least a punch (65) of the punch and die assembly (61) between an opened and a closed position, with the opened position being the maximum displacement between the punch (65) and the die (66) of the punch and die assembly (61), and with the closed position being the minimum displacement between the punch (65) and the die (66) of the punch and die assembly (61), and
a control unit (70, 1070) comprising an inlet fluid conduct (110, 1110), an outlet fluid conduct (120, 1120), a control unit housing (71, 1071) as well as a spool-valve (80), which is accommodated within the control unit housing (71, 1071) and which includes a spool-piston (85, 1085), having a first spool-piston end (85a) and a second spool-piston end (85b), reciprocally movable within a spool-cylinder, for controlling the fluid-drive assembly (F), wherein the spool-piston (85, 1085) is movable between an opened and a closed position, with the opened position enabling a fluid to flow between a fluid-source (S) and the fluid-drive assembly (F), and with the closed position preventing the fluid to flow between the fluid-source (S) and the fluid-drive assembly (F),
**characterized in that** the control unit (85, 1085) comprises a preventing device (150, 1150) for preventing an unintended fluid connection between the fluid-source (S) and the fluid-drive assembly (F).

2. The clipping-device according to claim 1,
**characterized in that** the preventing device (150, 1150) comprises a preventing element (152, 1152) having an operating position as well as a non-operating position and acting upon the spool-piston (85, 1085), in order to at least urge the spool-piston (85, 1085) into its closed position when the preventing element (152, 1152) is in its operating position.

3. The clipping-device according to claim 2,
**characterized in that** the preventing element (152, 1152) is urged by a spring (156, 1156) into its operating position.

4. The clipping-device according to claim 2 or 3,
**characterized in that** the preventing element (152, 1152) is urged by a fluid pressure being derived by the fluid-source (S) into its non-operating position.

5. The clipping-device according to any of claims 2 to 4,
**characterized in that** the preventing device (150, 1150) comprises a piston-cylinder assembly comprising a preventing device piston and a preventing device cylinder (154, 1154), wherein the preventing element (152, 1152) is formed by the preventing device piston.

6. The clipping-device according to any of claims 1 to 5,
**characterized by** an abutment unit (130, 1130) comprising an abutment element (132, 1132) as well as a counter-abutment element (134, 1134).

7. The clipping-device according to any of claims 1 to 6,
**characterized in that** the preventing device piston and the spool-piston (85, 1085) are in a coaxial alignment.

8. The clipping-device according to claim 7,
**characterized in that** the preventing device piston is positioned at least partially within the spool-piston (85, 1085) so that the preventing device cylinder (154, 1154) is formed by the inside of the spool-piston (85, 1085).

9. The clipping-device according to claim 6,
**characterized in that** the preventing device piston comprises a preventing device piston rod (155) having a first piston rod end (155a) as well as a second piston rod end (155b), wherein the first piston rod end (155a) is coupled to the preventing device piston enabling the preventing device piston rod (155) to move in the same direction as the preventing device piston and the second piston rod end (155b) is serving as the counter-abutment element (134, 1134), for limiting the movement of the spool-piston (85, 1085) within the spool-cylinder (87, 1087) when the preventing device piston is in its operating position.

10. The clipping-device according to claim 9,
**characterized in that** the abutment element (132, 1132) is in form of a setscrew positioned at least partially within the outlet fluid conduct (120, 1120) and extending into the path of the preventing device piston rod (155).

11. The clipping-device according to claim 9,
**characterized in that** the abutment element (132, 1132) is in form of an insert element positioned inside the outlet fluid conduct (120, 1120) comprising at least one insert element bar extending radially towards the centre of the insert element and into the path of the preventing device piston rod (155).

12. The clipping-device according to any of claims 1 to 6,
**characterized in that** the preventing device piston is positioned axially parallel to the spool-piston (85, 1085) and within the control unit housing (71, 1071).

13. The clipping-device according to claim 12,
**characterized in that** the preventing element (152, 1152) is urged by a spring (156, 1156) into its operating position and that the preventing element (152, 1152) is urged by a fluid pressure being derived from the fluid-source (S) into its non-operating position.

14. The clipping-device according to claim 13,
**characterized in that** the preventing device (150, 1150) comprises at least one arm (1160) and a stopper element (1161), wherein the arm (1160) is in a perpendicular alignment to the preventing device piston as well as firmly connected to the preventing device piston and the stopper element (1161) is extending into the path of the spool-piston (85).

15. The clipping-device according to claim 14,
**characterized in that** the stopper element is serving as the counter-abutment element (134, 1134) and the spool-piston (85, 1085) is serving as the abutment element (132, 1132), for limiting the movement of the spool-piston (85, 1085) within the spool-cylinder (87, 1087) when the preventing device piston is in its operating position.

16. The clipping-device according to any of the claims 1 to 15,
**characterized in that** the preventing device (150) is detachable from the spool-valve (80).

17. The clipping-device according to any of the claims 1 to 15, **characterized in that** the control unit housing (71) is detachable from the control unit (70).

## Patentansprüche

1. Clipvorrichtung zum Verschließen einer schlauchförmigen Verpackungshülle, in einer Clipmaschine A, zur Herstellung von wurstförmigen Produkten, im Besonderen Würste, durch Anbringen wenigstens eines Verschlußmittels C, im Besonderen eines Verschlußclips, an der schlauchförmigen Verpackungshülle, die Clipvorrichtung umfasst:
eine Stempel- und Matrizenanordnung (61) zum Anbringen und Verschließen des Verschlußmittels C auf der schlauchförmigen Verpackungshülle,
eine Fluidantriebsanordnung (F) zum Antreiben der Stempel- und Matrizenanordnung (61), beinhaltend wenigstens einen Stempelantriebskolben (62) der in einem Stempelantriebszylinder (63) hin und her bewegbar ist, wobei der Stempelantriebskolben (62) wenigstens einen Stempel (65) der Stempel- und Matrizenanordnung (61) reversibel bewegt zwischen einer geöffneten und einer geschlossenen Position, wobei die geöffnete Position der maximale Abstand zwischen dem Stempel (65) und der Matrize (66) der Stempel- und Matrizenanordnung (61) ist, und wobei die geschlossene Position der minimale Abstand zwischen dem Stempel (65) und der Matrize (66) der Stempel- und Matrizenanordnung (61) ist, und
eine Steuereinheit (70, 1070) beinhaltend eine Fluideinlassführung (110, 1110), eine Fluidauslassführung (120, 1120), ein Steuereinheitsgehäuse (71, 1071) sowie ein Schieberventil (80), das in dem Steuereinheitsgehäuse (71, 1071) aufgenommen ist, und welches einen Schieberkolben (85, 1085) aufweist, mit einem ersten Schieberkolbenende (85a) und einem zweiten Schieberkolbenende (85b), der in einem Schieberzylinder hin und her bewegbar ist, zum Steuern der Fluidantriebsanordnung (F), wobei der Schieberkolben (85, 1085) zwischen einer geöffneten und einer geschlossenen Position bewegbar ist, wobei die geöffnete Position ermöglicht, dass ein Fluid zwischen einer Fluidquelle (S) und der Fluidantriebsanordnung (F) fließt, und wobei die geschlossene Position verhindert, dass das Fluid zwischen der Fluidquelle (S) und der Fluidantriebsanordnung (F) fließt,
**dadurch gekennzeichnet, dass** die Steuereinheit (85, 1085) eine Verhinderungsvorrichtung (150, 1150) umfasst, zum Verhindern einer unbeabsichtigten fluidischen Verbindung zwischen der Fluidquelle (S) und der Fluidantriebsanordnung (F).

2. Clipvorrichtung nach Anspruch 1,
**dadurch gekennzeichnet, dass** die Verhinderungsvorrichtung (150, 1150) ein Verhinderungselement (152, 1152) aufweist, das eine Betriebsposition sowie eine Außerbetriebsposition hat und das auf den Schiebekolben (85, 1085) einwirkt, um zumindest den Schiebekolben (85, 1085) in seine geschlossene Position zu drängen, wenn das Verhinderungselement (152, 1152) in seiner Betriebsposition ist.

3. Clipvorrichtung nach Anspruch 2,
**dadurch gekennzeichnet, dass** das Verhinderungselement (152, 1152) durch eine Feder (156, 1156) in seine Betriebsposition gedrängt ist.

4. Clipvorrichtung nach den Ansprüchen 2 oder 3,
**dadurch gekennzeichnet, dass** das Verhinderungselement (152, 1152) durch einen Fluiddruck, der von der Fluidquelle (S) abgeleitet ist, in seine Außerbetriebsposition gedrängt ist.

5. Clipvorrichtung nach einem der Ansprüche 2 bis 4,
**dadurch gekennzeichnet, dass** die Verhinderungsvorrichtung (150, 1150) eine Kolbenzylinderanordnung umfasst, die einen Verhinderungsvorrichtungskolben und einen Verhinderungsvorrichtungszylinder (154, 1154) aufweist, wobei das Verhinderungselement (152, 1152) durch den Verhinderungsvorrichtungskolben gebildet ist.

6. Clipvorrichtung nach einem der Ansprüche 1 bis 5,
**gekennzeichnet durch** eine Anschlageinheit (130, 1130), umfassend ein Anschlagelement (132, 1132) sowie ein Gegenanschlagelement (134, 1134).

7. Clipvorrichtung nach einem der Ansprüche 1 bis 6,
**dadurch gekennzeichnet, dass** der Verhinderungsvorrichtungskolben und der Schiebekolben (85, 1085) koaxial ausgerichtet sind.

8. Clipvorrichtung nach Anspruch 7,
**dadurch gekennzeichnet, dass** der Verhinderungsvorrichtungskolben zumindest teilweise in dem Schiebekolben (85, 1085) positioniert ist, sodass der Verhinderungsvorrichtungszylinder (154, 1154) durch die Innenseite des Schiebekolbens (85, 1085) gebildet ist.

9. Clipvorrichtung nach Anspruch 6,
**dadurch gekennzeichnet, dass** der Verhinderungsvorrichtungskolben einen Verhinderungsvorrichtungskolbenbolzen (155) aufweist, mit einem ersten Kolbenbolzenende (155a) sowie einem zweiten Kolbenbolzenende (155b), wobei das erste Kolbenbolzenende (155a) mit dem Verhinderungsvorrichtungskolben verbunden ist, um dem Verhinderungsvorrichtungskolbenbolzen (155) zu ermöglichen, sich in die gleiche Richtung zu bewegen wie der Verhinderungsvorrichtungskolben und das zweite Kolbenbolzenende (155b) dient als Gegenanschlagselement (134, 1134), zur Begrenzung der Bewegung des Schiebekolbens (85, 1085) im Schieberzylinder (87, 1087), wenn der Verhinderungsvorrichtungskolben in seiner Betriebsposition ist.

10. Clipvorrichtung nach Anspruch 9,
**dadurch gekennzeichnet, dass** das Anschlagelement (132, 1132) durch eine Stellschraube gebildet ist, die zumindest teilweise in der Fluidauslassführung (120, 1120) positioniert ist und sich in den Weg des Verhinderungsvorrichtungskolbenbolzens (155) erstreckt.

11. Clipvorrichtung nach Anspruch 9,
**dadurch gekennzeichnet, dass** das Anschlagelement (132, 1132) durch ein Einsatzelement gebildet ist, dass im Inneren der Fluidauslassführung (120, 1120) positioniert ist und wenigstens einen Einsatzelementstab aufweist, der sich radial zur Mitte des Einsatzelements und in den Weg des Verhinderungsvorrichtungskolbenbolzens (155) erstreckt.

12. Clipvorrichtung nach einem der Ansprüche 1 bis 6,
**dadurch gekennzeichnet, dass** der Verhinderungsvorrichtungskolben achsparallel zum Schiebekolben (85, 1085) und im Steuerungseinheitsgehäuse (71, 1071) positioniert ist.

13. Clipvorrichtung nach Anspruch 12,
**dadurch gekennzeichnet, dass** das Verhinderungselement (152, 1152) durch eine Feder (156, 1156) in seine Betriebsposition gedrängt ist, und dass das Verhinderungselement (152, 1152) durch einen Fluiddruck in seiner Außerbetriebsposition gedrängt ist, der von der Fluidquelle (S) abgeleitet ist.

14. Clipvorrichtung nach Anspruch 13,
**dadurch gekennzeichnet, dass** die Verhinderungsvorrichtung (150, 1150) wenigstens einen Arm (1160) und ein Stopperelement (1161) umfasst, wobei der Arm (1160) in senkrechter Ausrichtung zum Verhinderungsvorrichtungskolben und fest mit dem Verhinderungsvorrichtungskolben verbunden ist und das Stopperelement (1161) sich in den Weg des Schiebekolben (85) erstreckt.

15. Clipvorrichtung nach Anspruch 14,
**dadurch gekennzeichnet, dass** das Stopperelement als Gegenanschlagselement (134, 1134) dient und der Schiebekolben (85, 1085) als das Anschlagelement (132, 1132) dient, zum Begrenzen der Bewegung des Schiebekolben (85, 1085) in dem Schiebezylinder (87, 1087) wenn der Verhinderungsvorrichtungskolben in seiner Betriebsposition ist.

16. Die Clipvorrichtung nach einem der Ansprüche 1 bis 15,
**dadurch gekennzeichnet, dass** die Verhinderungsvorrichtung (150) vom Schiebeventil (80) abnehmbar ist.

17. Die Clipvorrichtung nach jedem der Ansprüche 1 bis 15,
**dadurch gekennzeichnet, dass** das Steuereinheitsgehäuse (71) von der Steuereinheit (70) abnehmbar ist.

## Revendications

1. Dispositif d'agrafage pour fermer une enveloppe tubulaire d'emballage dans une machine A d'agrafage, pour produire des produits en forme de saucisse, en particulier des saucisses, en appliquant au moins un moyen C de fermeture, en particulier une agrafe de fermeture, à l'enveloppe tubulaire d'emballage, le.dispositif d'agrafage comprenant:
un ensemble (61) à poinçon et matrice, pour mettre et fermer le moyen C de fermeture sur l'enveloppe tubulaire d'emballage,
un ensemble (F) à transmission hydraulique, pour entraîner l'ensemble (61 ) à poinçon et matrice, comprenant un piston (62) d'entraînement du poinçon, mobile suivant un mouvement alternatif dans un cylindre (63) d'entraînement du poinçon, le piston (62) d'entraînement du poinçon déplaçant ré-versiblement au moins un poinçon (65) de l'ensemble (61) à poinçon et matrice entre une position ouverte et une position fermée, la position ouverte étant le déplacement maximum entre le poinçon (65) et la matrice (66) de l'ensemble (61) à poinçon et matrice et la position fermée étant le déplacement minimum entre le poinçon (65) et la matrice (66) de l'ensemble (61) à poinçon et matrice, et
une unité (70, 1070) de commande, comprenant un conduit (110, 1110) d'entrée pour du fluide, un conduit (120, 1120) de sortie pour du fluide, un boîtier (71, 1071) d'unité de commande, ainsi qu'un distributeur (80) à tiroir, qui est logé dans le boîtier (71, 1071) de l'unité de commande et qui comprend un piston (85, 1085) de tiroir, ayant une première extrémité (85a) de piston de tiroir et une deuxième extrémité (85b) de piston de tiroir, mobile suivant un mouvement alternatif dans un cylindre de tiroir, pour commander l'ensemble (F) à transmission hydraulique, le piston (85, 1085) de tiroir étant mobile entre une position ouverte et une position fermée, la position ouverte permettant à un fluide de s'écouler entre une source (S) de fluide et l'ensemble (F) à transmission hydraulique et la position fermée empêchant le fluide de s'écouler entre la source (S) de fluide et l'ensemble (F) à transmission hydraulique,
**caractérisé en ce que** l'unité (85, 1085) de commande comprend un dispositif (150, 1150) de prévention, pour empêcher une liaison de fluide non délibérée entre la source (S) et l'ensemble (F) à transmission hydraulique.

2. Dispositif d'agrafage suivant la revendication 1,
**caractérisé en ce que** le dispositif (150, 1150) de prévention comprend un élément (152, 1152) de prévention ayant une position de fonctionnement, ainsi qu'une position de non-fonctionnement, et agissant sur le piston (85, 1085) de tiroir, afin de repousser au moins le piston (85, 1085) de tiroir dans la position fermée, lorsque l'élément (152, 1152) de prévention est dans la position de fonctionnement.

3. Dispositif d'agrafage suivant la revendication 2,
**caractérisé en ce que** l'élément (152, 1152) de prévention est repoussé par un ressort (156, 1156) dans la position de fonctionnement.

4. Dispositif d'agrafage suivant la revendication 2 ou 3,
**caractérisé en ce que** l'élément (152, 1152) de prévention est repoussé par une pression de fluide en provenance de la source (S) de fluide dans la position de non-fonctionnement.

5. Dispositif d'agrafage suivant l'une quelconque des revendications 2 à 4,
**caractérisé en ce que** le dispositif (150, 1150) de prévention comprend un ensemble à piston-cylindre, comprenant un piston de dispositif de prévention et un cylindre (154, 1154) de dispositif de prévention, l'élément (152, 1152) de prévention étant formé par le piston du dispositif de prévention.

6. Dispositif d'agrafage suivant l'une quelconque des revendications 1 à 5, **caractérisé par** une unité (130, 1130) de butée, comprenant un élément (132, 1132) de butée, ainsi qu'un élément (134, 1134) de contre-butée.

7. Dispositif d'agrafage suivant l'une quelconque des revendications 1 à 6, **caractérisé en ce que** le piston du dispositif de prévention et le piston (85, 1085) de tiroir sont dans un alignement coaxial.

8. Dispositif d'agrafage suivant la revendication 7,
**caractérisé en ce que** le piston du dispositif de prévention est placé, au moins partiellement, dans le piston (85, 1085) de tiroir, de manière à ce que le cylindre (154, 1154) du dispositif de prévention soit formé par l'intérieur du piston (85, 1085) de tiroir.

9. Dispositif d'agrafage suivant la revendication 6,
**caractérisé en ce que** le piston du dispositif de prévention comprend une tige (155) du piston du dispositif de prévention, ayant une première extrémité (155a) de la tige du piston, ainsi qu'une seconde extrémité (155b) de la tige du piston, la première extrémité (155a) de la tige du piston étant accouplée au piston du dispositif de prévention, en permettant à la tige (155) du piston du dispositif de prévention de se déplacer dans la même direction que le piston du dispositif de prévention, et la seconde extrémité (155b) de la tige du piston sert d'élément (134, 1134) de contre-butée, pour limiter le déplacement du piston (85, 1085) de tiroir dans le cylindre (87, 1087) de tiroir, lorsque le piston du dispositif de prévention est dans la position de fonctionnement.

10. Dispositif d'agrafage suivant la revendication 9,
**caractérisé en ce que** l'élément (132, 1132) de butée est sous la forme d'une vis de réglage disposée, au moins en partie, dans le conduit (120, 1120) de sortie pour du fluide et s'étendant dans le trajet de la tige (155) du piston du dispositif de prévention.

11. Dispositif d'agrafage suivant la revendication 9,
**caractérisé en ce que** l'élément (132, 1132) de butée est sous la forme d'un élément d'insertion placé à l'intérieur du conduit (120, 1120) de sortie pour du fluide et comprenant au moins une barre de l'élément d'insertion s'étendant radialement en direction du centre de l'élément d'insertion et dans le trajet de la tige (155) du piston du dispositif de prévention.

12. Dispositif d'agrafage suivant l'une quelconque des revendications 1 à 6,
**caractérisé en ce que** le piston du dispositif de prévention est placé axialement parallèlement au piston (85, 1085) de tiroir et dans le boîtier (71, 1071) de l'unité de commande.

13. Dispositif d'agrafage suivant la revendication 12,
**caractérisé en ce que** l'élément (152, 1152) de prévention est repoussé par un ressort (156, 1156) dans la position de fonctionnement et **en ce que** l'élément (152, 1152) de prévention est repoussé par une pression de fluide en provenance de la source (S) de fluide dans la position de non-fonctionnement.

14. Dispositif d'agrafage suivant la revendication 13,
**caractérisé en ce que** le dispositif (150, 1150) de prévention comprend au moins un bras (1160) et un élément (1161) d'arrêt, le bras (1160) étant dans un alignement perpendiculaire au piston du dispositif de prévention, ainsi que relié fermement au piston du dispositif de prévention et l'élément (1161) d'arrêt s'étendant dans le trajet du piston (85) de tiroir.

15. Dispositif d'agrafage suivant la revendication 14,
**caractérisé en ce que** l'élément d'arrêt sert d'élément (134, 1134) de contre-butée et le piston (85, 1085) de tiroir sert d'élément (132, 1132) de butée, pour limiter le déplacement du piston (85, 1085) de tiroir dans le cylindre (87, 1087) de tiroir, lorsque le piston du dispositif de prévention est dans la position de fonctionnement.

16. Dispositif d'agrafage suivant l'une quelconque des revendications 1 à 15,
**caractérisé en ce que** le dispositif (150) de prévention peut être détaché du distributeur (80) à tiroir.

17. Dispositif d'agrafage suivant l'une quelconque des revendications 1 à 15,
**caractérisé en ce que** le boîtier (71) d'unité de commande peut être détaché de l'unité (70) de commande.
